# EUROPEAN PATENT SPECIFICATION

(11) **EP 1 352 809 B1**
(45) Date of publication and mention of the grant of the patent: **07.06.2006**
(21) Application number: 03007836.4
(22) Date of filing: 04.04.2003
(51) Int. Cl.: B62D 25/08, B62D 29/00, B62D 25/12

(54) **Front structure of a vehicle**
Frontteil eines Kraftfahrzeuges
Face avant de véhicule

(30) Priority: 09.04.2002 IT TO20020310
(43) Date of publication of application: 15.10.2003
(73) Proprietor: FIAT AUTO S.p.A., 10135 Torino (IT)
(72) Inventor: La Pignola, Luca, 80124 Napoli (IT)
(74) Representative: Cerbaro, Elena

(56) References cited:
- EP-A- 1 072 501
- EP-A- 1 101 689
- FR-A- 2 805 497

## Description

The present invention relates to a front structure of a vehicle.

As is known, the front structure of a vehicle normally consists of a unit structure, which is generally highly complex, and is produced in each case according to the specific style of the vehicle such as to permit accommodation of the optical units provided in its own upper portion, and of the radiant masses in its own intermediate/lower portion. The structure is then formed such as to support connected to it the bumper cross-member, the lock for the bonnet, and in general all the added components which are specific for functional completion of the particular vehicle.

The document EP 1 072 501 A discloses a front structure of a vehicle according the preamble of claim 1.

Although the above-described known structures are universally used, they suffer from the disadvantage that they can barely be reconfigured; in other words, the construction method of the above-described known structures does not make it possible to modify extremely simply and quickly or to use one or more parts of a structure designed and produced for a vehicle with predetermined aesthetic and/or functional characteristics, such as to obtain a new structure specific to a vehicle which is similar to, or decidedly different from, that to which the preceding structure was dedicated.

The object of the present invention is to provide a front structure of a vehicle which makes it possible to solve the above-described problem simply and economically.

According to the present invention, a front structure of a vehicle is provided, comprising an upper portion which delimits at least one opening which accommodates at least partially a front optical unit, and a lower portion which supports at least the radial masses of the vehicle; the said upper and lower attachment portions being distinct from one another and which is characterised in that it further comprises an attachment portion, and first and second connection means being provided in order to connect the said upper and lower portions to the attachment portion; at least one from amongst the said upper and lower portions being able to be selected from two or more respectively upper and lower portions which can be connected to the said attachment portion and are geometrically and/or dimensionally different from one another.

Preferably, in the above-described structure, both the said upper and lower portions can be selected from a plurality of respectively upper and lower portions which are different from one another and can be connected to the said attachment portion.

Also preferably, the said lower portion comprises at least one anti-impact cross-member and advantageously at least one from amongst the said lower and upper portions comprises a metal body and a reinforcement for the said metal body which is made of plastics material.

The invention will now be described with reference to the attached figures, which illustrate non-limiting embodiments of it in which:
figure 1 is a perspective view with parts removed for the sake of clarity of a first preferred embodiment of the front structure of a vehicle according to the present invention;
figure 2 is an exploded perspective view of the structure in figure 1;
figure 3 is a figure similar to figure 1, and illustrates a second preferred embodiment of the front structure according to the present invention;
figure 4 is an exploded perspective view of the structure in figure 3; and
figure 5 is a partial front view of a detail of figures 1 and 2.

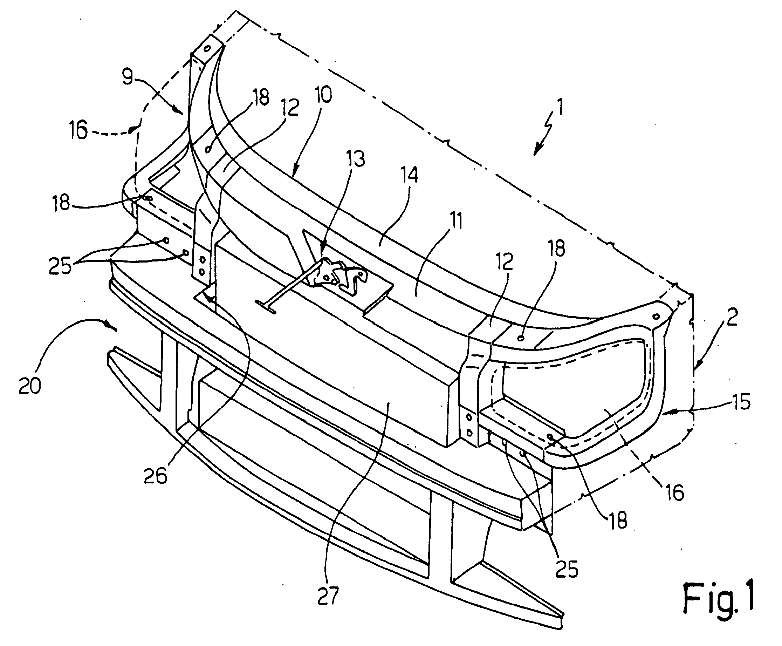

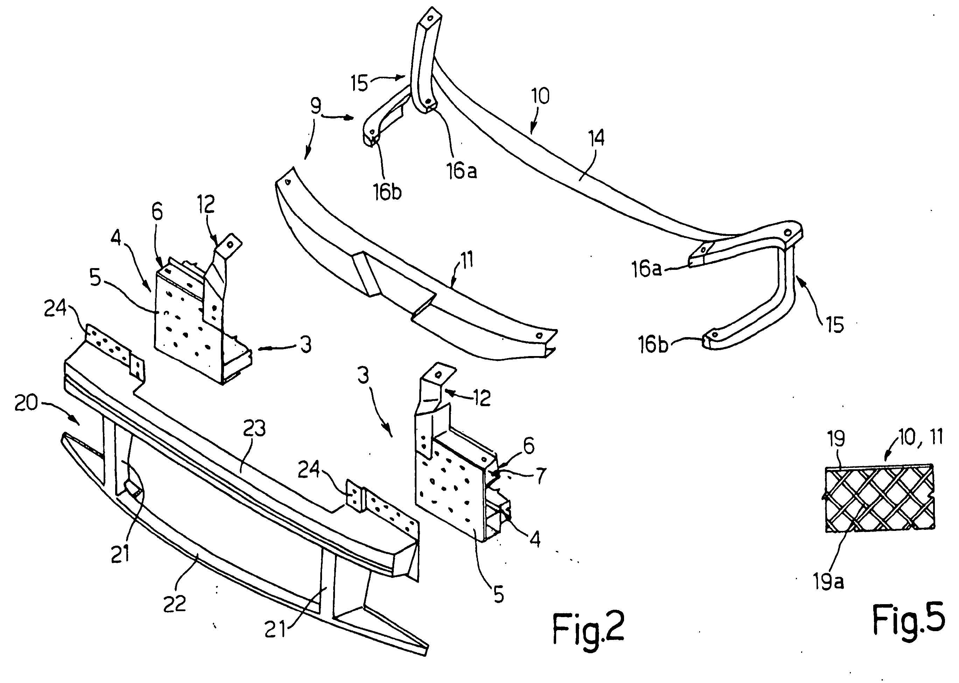

In figures 1 and 2, 1 indicates as a whole a front structure of a vehicle 2. The structure 1 comprises a portion 3 for attachment and support which can be connected to the remaining part of the structure (not illustrated) of the vehicle, and comprises in the particular example described two metal bodies 4, which in turn each comprise their own perforated attachment plate 5, and a tubular body 6 which is connected to the plate 5 and defines a receptacle 7.

Again with reference to figures 1 and 2, the structure 1 also comprises an upper portion 9, which in the particular example described in turn comprises two profiled bodies 10 and 11 which are distinct from one another and are each produced in a single piece, and the body 11 of which is connected to the plate 5 by means of respective brackets 12 and supports a lock 13 for the bonnet for closure of the engine compartment. The body 10 comprises a curved elongate intermediate portion 14 which is disposed in contact with the body 11 and two lateral portions 15 which are the same as one another, are integral with the intermediate portion 14 and extend laterally on the exterior of the body 11. In the particular example described, the lateral portions 15 have a shape substantially in the form of a C with concavity facing forwards, each defines a frame or seat for partial accommodation of a corresponding optical unit 16 (figure 1) and comprises respective free end sections 16a and 16b which engage the bodies 17 and the opposite ends of the body 11 and are retained by respective pins 18 (figure 1).

According to a variant not illustrated, the bodies 10 and 11 are connected integrally to one another, and are advantageously co-stamped such as to form a body made in a single piece.

The bodies 10 and 11 are preferably made of metal material; alternatively, as illustrated in figure 5, the bodies 10 and 11 comprise an outer shell 19 made of plastics material and a reinforcement block 10a which is advantageously made of a perforated or alveolar metal material and is accommodated in the shell 19.

Again with reference to figures 1 and 2, the structure 1 also comprises a lower portion 20, which in the particular example described is made of metal material or alternatively using a shell made of metal material and a reinforcement made of plastics material in the same way as the bodies 10 and 11, and comprises a single body, which in turn comprises two substantially vertical uprights 21 in the form of a plate, a lower cross-member 22 which is integral with the lower ends of the uprights 21, and an upper cross-member 23 which is integral with the upper ends of the uprights 21 and can absorb the energy imparted by the front bumper of the vehicle in the event of an impact. The end sections of the upper cross-member 23 which project from the uprights 21 support connected to them integrally respective perforated attachment plates 24 which are connected to the plates 5 by means of corresponding screws 25 or alternatively by being welded. The uprights 21, and the lower 22 and upper 23 cross-members define between one another a rear seat 26, i.e. with a cavity which faces rearwards, which accommodates the radiator 27 of the vehicle which is supported on the lower cross-member 22.

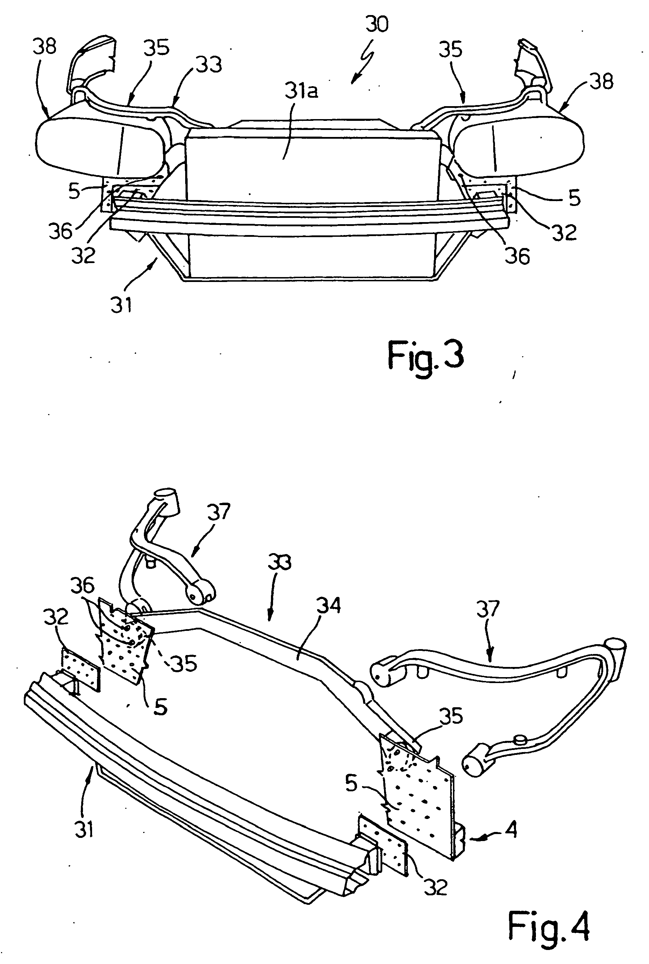

Whilst continuing to be connected to the portion 3, the upper portion 9 and the lower portion 10 can have curvatures and/or dimensions different from those indicated, both in order to adapt to the particular style of the vehicle and to accommodate optical units or radiant masses which are different from one another, since they are designed and produced for different vehicles. In other words, both the upper portion 9 and the lower portion 20 can be selected from amongst a plurality of upper and lower portions which are different from one another but can all be connected to the bodies 4 of the portion 3. According to the portion selected, the intermediate portion can also be further modified by the addition of specific details for adaptation to the upper or lower portion selected. By way of example, figures 3 and 4 illustrate a front structure 30 which comprises a lower portion 31 similar to the portion 20, which supports a radiator 31a and is connected directly, preferably by means of welding, to a pair of perforated plates 32 for connection to the perforated plates 5 of the bodies 4. The structure 30 then comprises an upper portion 33, which differs from the portion 9 in that, as a replacement for the body 10, it comprises an assembly constituted by three bodies which are different from one another and are connected to one another for example by means of screws. In particular, the upper portion 33 comprises a cross-member 34 which has concavity facing downwards and ends in two opposite end portions 35, each of which is connected directly to the corresponding plate 32 such that it can be released, by means of screws 36. There are connected to the cross-member 34, advantageously by means of screws, two shaped bodies 37 which have a configuration different from that of the portions 15, and like the portions 15 each define a frame for a corresponding optical unit 38.

It is thus apparent from the foregoing that the method for production of the front structures 1,30 described, and in particular the fact of using a common attachment portion to which it is possible to connect selectively different portions which can be selected according to the aesthetic and/or dimensional characteristics of components or sets of components which characterise the vehicle, makes it possible to increase substantially the flexibility of the front structure and, in particular, to produce a plurality of assembled structures, each of which can easily be produced but above all can easily be modified, for example when it becomes necessary to make changes to the vehicle in order to increase the aesthetic value or the functionality of some components of the vehicle itself.

The fact that one or both of the upper and lower portions is obtained by using a stiffened metal shell with a block of perforated or alveolar plastics material makes it possible to reduce the weight whilst keeping the resistance to deformation substantially unchanged.

It will also be apparent from the foregoing description that modifications and variations which do not depart from the field of protection of the present invention conferred by the appended claims can be made to the structures 1,30 described. In particular, both the attachment portion 3 and the other portions of the structure can have forms or dimensions different from those indicated by way of example.

## Claims

1. Front structure (1;30) of a vehicle comprising an upper portion (9;33) which delimits at least one opening which accommodates at least partially a front optical unit (16;38), and a lower portion (20;31) which supports at least the radiant masses (27;31a) of the vehicle; the said upper (9;33) and lower (20;31) attachment portions (5) being distinct from one another and **characterised in that** it further comprises an attachment portion (5), and first (18) and second (25) connection means being provided in order to connect the said upper (9;33) and lower (20;31) portions to the said attachment portion (5); at least one from amongst the said upper and lower portions being able to be selected from two or more respectively upper and lower portions which can be connected to the said attachment portion (5) and are geometrically and/or dimensionally different from one another.

2. Structure according to claim 1, **characterised in that** both the said upper and lower portions can be selected from a plurality of respectively upper and lower portions which are different from one another and can be connected to the said attachment portion (5).

3. Structure according to claim 1 or claim 2, **characterised in that** the said lower portion comprises at least one anti-impact cross-member (23).

4. Structure according to any one of the preceding claims, **characterised in that** at least one from amongst the said lower and upper portions comprises a body (19) made of plastics material and a reinforcement (19a) made of metal material, for the said body (19) made of plastics material.

5. Structure according to claim 4, **characterised in that** the said body (19) made of plastics material is in the form of a shell and the said reinforcement comprises a perforated or alveolar portion.

6. Structure according to any one of the preceding claims, **characterised in that** the said upper portion (9) comprises a cross-member (11) to support a lock (13) for a bonnet of the said vehicle.

7. Structure according to any one of the preceding claims, **characterised in that** the said first (18) and second (25) connection means are connection means which can be released.

## Patentansprüche

1. Frontstruktur (1;30) eines Fahrzeugs, mit einem oberen Abschnitt (9;33), der mindestens eine Öffnung begrenzt, die mindestens teilweise eine vordere optische Einheit (16;38) aufnimmt, und einem unteren Abschnitt (20;31), der mindestens die strahlenden Massen (27;31a) des Fahrzeugs trägt; wobei die oberen (9;33) und unteren (20;31) Befestigungsabschnitte (5) voneinander verschieden sind, und **dadurch gekennzeichnet, dass** sie ferner einen Befestigungsabschnitt (5) und erste (18) und zweite (25) Verbindungsmittel umfasst, die bereitgestellt werden, um die oberen (9;33) und unteren (20;31) Abschnitte mit dem Befestigungsabschnitt (5) zu verbinden; wobei mindestens einer unter den oberen und unteren Abschnitten geeignet ist, um aus zwei oder mehreren jeweiligen oberen und unteren Abschnitten ausgewählt zu werden, die mit dem Befestigungsabschnitt (5) verbunden werden können und geometrisch und/oder dimensionsmäßig voneinander unterschiedlich sind.

2. Struktur gemäß Anspruch 1, **dadurch gekennzeichnet, dass** sowohl die oberen als auch die unteren Abschnitte aus einer Mehrzahl von jeweiligen oberen und unteren Abschnitten ausgewählt werden können, die voneinander unterschiedlich sind und mit dem Befestigungsabschnitt (5) verbunden werden können.

3. Struktur gemäß Anspruch 1 oder Anspruch 2, **dadurch gekennzeichnet, dass** der untere Abschnitt mindestens einen Anti-Stoß-Querträger (23) umfasst.

4. Struktur gemäß einem der vorhergehenden Ansprüche, **dadurch gekennzeichnet, dass** mindestens einer unter den unteren und oberen Abschnitten einen aus einem Kunststoffmaterial hergestellten Körper (19) und eine aus einem Metallmaterial hergestellte Verstärkung (19a) für den aus Kunststoffmaterial hergestellten Körper (19) umfasst.

5. Struktur gemäß Anspruch 4, **dadurch gekennzeichnet, dass** der aus Kunststoffmaterial hergestellte Körper (19) in der Form einer Schale ist und die Verstärkung einen perforierten oder alveolären Abschnitt umfasst.

6. Struktur gemäß einem der vorhergehenden Ansprüche, **dadurch gekennzeichnet, dass** der obere Abschnitt (9) einen Querträger (11) umfasst, um einen Riegel (13) für eine Haube des Fahrzeugs zu tragen.

7. Struktur gemäß einem der vorhergehenden Ansprüche, **dadurch gekennzeichnet, dass** die ersten (18) und zweiten (25) Verbindungsmittel Verbindungsmittel sind, die gelöst werden können.

## Revendications

1. Structure avant (1 ; 30) d'un véhicule comprenant une partie supérieure (9 ; 33) qui délimite au moins une ouverture qui loge au moins partiellement un bloc optique avant (16 ; 38), et une partie inférieure (20 ; 31) qui supporte au moins les masses radiantes (27 ; 31 a) du véhicule ; lesdites parties de fixation (5) supérieure (9 ; 33) et inférieure (20 ; 31) étant distinctes l'une de l'autre, **caractérisée en ce qu'**elle comprend en outre une partie de fixation (5) et un premier (18) et un second (25) moyens de connexion prévus pour connecter lesdites parties supérieure (9 ; 33) et inférieure (20 ; 31) à ladite partie de fixation (5) ; au moins l'une parmi lesdites parties supérieure et inférieure étant susceptible d'être choisie parmi deux ou plusieurs parties respectivement supérieures et inférieures qui peuvent être connectées à ladite partie de fixation (5) et sont géométriquement et/ou dimensionnellement différentes les unes des autres.

2. Structure selon la revendication 1, **caractérisée en ce qu'**à la fois lesdites parties supérieure et inférieure peuvent être choisies parmi plusieurs parties respectivement supérieures et inférieures qui sont différentes les unes des autres et qui peuvent être connectées à ladite partie de fixation (5)

3. Structure selon la revendication 1 ou la revendication 2, **caractérisée en ce que** ladite partie inférieure comprend au moins une traverse pare-chocs (23).

4. Structure selon l'une quelconque des revendications précédentes, **caractérisée en ce que** l'une au moins parmi lesdites parties inférieure et supérieure comprend un corps (19) fait en matériau plastique et un renfort (19a) fait en matériau métallique pour ledit corps (19) fait en matériau plastique.

5. Structure selon la revendication 4, **caractérisée en ce que** ledit corps (19) fait en matériau plastique est sous la forme d'une coquille et ledit renfort comprend une partie perforée ou alvéolaire.

6. Structure selon l'une quelconque des revendications précédentes, **caractérisée en ce que** ladite partie supérieure (9) comprend une traverse (11) destinée à supporter un verrouillage (13) pour un capot dudit véhicule.

7. Structure selon l'une quelconque des revendications précédentes, **caractérisée en ce que** lesdits premier (18) et second (25) moyens de connexion sont des moyens de fixation qui peuvent être détachés.
